Europäisches Patentamt

European Patent Office

Office européen des brevets

(19)

(11) Veröffentlichungsnummer: **0 342 271**
**A2**

# (12) EUROPÄISCHE PATENTANMELDUNG

(21) Anmeldenummer: 88120685.8

(22) Anmeldetag: 10.12.88

(51) Int. Cl.4: **C03C 17/25**

(30) Priorität: 29.12.87 DE 3744368

(43) Veröffentlichungstag der Anmeldung:
23.11.89 Patentblatt 89/47

(84) Benannte Vertragsstaaten:
CH FR GB IT LI NL

(71) Anmelder: **Schott Glaswerke**
**Hattenbergstrasse 10**
**D-6500 Mainz(DE)**

(84) **CH FR GB IT LI NL**

Anmelder: **CARL-ZEISS-STIFTUNG**
**Schott Glaswerke Hattenbergstrasse 10**
**D-6500 Mainz 1(DE)**

(84) **GB**

(72) Erfinder: **Arfsten, Nanning, Dr.**
**Helmerichstrasse 35**
**D-6531 Ockenheim(DE)**
Erfinder: **Piehlke, Hermann**
**Mainzer Strasse 2**
**D-6506 Nackenheim(DE)**
Erfinder: **Hussmann, Eckart, Dr.**
**Kleiststrasse 4**
**D-6501 Ober-Olm(DE)**

(54) **Verfahren zur Herstellung von festen optischen Einfach und Mehrfach-Interferenz-Schichten.**

(57) Verfahren zur Herstellung von festen optischen Einfach- und Mehrfach-Interferenz-Schichten auf einem Substrat, bei dem auf das Substrat pro Schicht durch Ein- und Auftauchen in eine Tauchlösung oder durch Aufschleudern ein Flüssigfilm, der reaktive Verbindungen enthält, aus denen anschließend die Schichten erzeugt werden, aufgebracht und der Flüssigfilm in die Schicht umgewandelt wird, dadurch gekennzeichnet, daß dem Flüssigfilm durch Einwirkung von Strahlung hoher Intensität die zur Umwandlung des betreffenden Flüssigfilms in die jeweilige Schicht notwendige Energie zugeführt wird.

EP 0 342 271 A2

## Verfahren zur Herstellung von festen optischen Einfach- und Mehrfach-Interferenz-Schichten

Die vorliegende Erfindung betrifft ein Verfahren zur Herstellung von festen optischen Einfach- und Mehrfach- Interferenz-Schichten aus Metalloxiden auf einem Substrat, bei dem auf das Substrat pro Schicht mit einer Tauchlösung durch Ein- und Auftauchen ein Flüssigfilm, der reaktive Verbindungen enthält, aus denen anschließend die Schichten erzeugt werden, aufgebracht und der Flüssigfilm in die feste Schicht umgewandelt wird.

Es existieren bereits verschiedene Verfahren zur Herstellung von optischen Schichten auf einem Substrat.

Bei dem aus der DE-AS 10 62 901 (Schröder et al.) bekannt gewordenen Verfahren zur Herstellung von Sichtgläsern werden die in organischen Lösungsmitteln gelösten Ausgangsstoffe für die Schichten auf der Oberfläche aufgetragen, der entstandene Film wird getrocknet, und danach werden das Lösungsmittel und etwaige flüchtige Reaktionsprodukte durch Erhitzen ausgetrieben. Als Schichtmaterialien kommen hier insbesondere $SiO_2$ und $TiO_2$ und/oder $ZrO_2$ in Frage.

Ein Review über solche Tauchbeschichtungen gibt H. Dislich, Glastech. Ber. 57 (1984) 229ff.

Ein Verfahren zur Erzeugung von transparenten elektrisch leitfähigen infrarotreflektierenden Indiumoxid-Zinnoxid-Schichten, insbesondere auf Glasscheiben, ist in der DE-OS 33 00 589 beschrieben. Es besteht darin, daß die Glasscheiben in eine erste Lösung getaucht werden, die eine hydrolysierbare Siliziumverbindung und hydrolysierbare Verbindungen des Titans, Zirkons, Aluminiums, Zinns oder Tantals enthält, daß die Glasscheiben in einer Feuchtigkeit enthaltenden Atmosphäre auf maximal 450° C erhitzt werden, daß die vorbeschichteten Scheiben in eine zweite Lösung getaucht werden, die hydrolysierbare Verbindungen des Indiums und des Zinns enthält, daß die Scheiben bei Temperaturen unter 250° C getrocknet werden und daß die Scheiben anschließend in einer reduzierenden Atmosphäre auf maximal 500° C erhitzt werden.

Nachteilig bei den vorstehend beschriebenen Verfahren ist, daß die aufgetragenen Flüssigfilme als die Vorläufer der Schichten zunächst getrocknet und dann durch einen zusätzlichen Erhitzungsschritt in die endgültige Schichtform überführt werden müssen.

Andererseits kann zur Ausbildung von dünnen Schichten auf einer Festkörperoberfläche die laserinduzierte chemische Abscheidung aus der Gasphase angewendet werden. Ein Vertreter der hier angesprochenen Verfahren ist beispielsweise das "CVD-Verfahren". Bei diesem thermisch induzieren Materialabscheidungsverfahren aus der Gasphase (CVD = chemical vapor deposition) sind relativ hohe Temperaturen (600 bis 900° C) erforderlich. Bei der Plasma-CVD lassen sich die Temperaturen durch den Einsatz elektrischer Entladungen auf 350° C bis 450° C senken.

Für die photochemische Abscheidung von Materialien aus der Gasphase durch IR- oder UV-Laser bestehen drei Möglichkeiten:

Beim pyrolytischen Verfahren wird das Laserlicht im allgemeinen vom Reaktionsgas nicht absorbiert, sondern heizt die Substratoberfläche lokal stark auf. Wegen der daraus resultierenden großen Temperaturgradienten wird das Material in einem end begrenzten Bereich abgeschieden, so daß der Transport des Materials aus der Gasphase aus verschiedenen Richtungen erfolgen kann.

Bei der zweiten Möglichkeit wird statt der sonst meistens benutzten Ionenzerstäubungstechnik des abzuschneidende Material mit einem Laserstrahl aus einem Target freigesetzt; dies ergibt einen besser ausgerichteten und homogeneren Strahl des zu deponierenden Materials.

Beim photolytischen Verfahren, der dritten Möglichkeit, werden die das abzuschneidende Material bildenden Verbindungen selektiv in angeregte Zustände gebracht. Die Produkte der Laserphotodissoziation können entweder direkt auf der zu beschichtenden Oberfläche kondensieren oder mit weiteren in der oberflächennahen Schicht vorhandenen Teilen reagieren.

Diesen Verfahren ist gemeinsam, daß als Ausgangssubstanzen zur Schichtherstellung nur leichtflüchtige und unzersetzt leicht verdampfbare Verbindungen des abzuschneidenden Materials verwendet werden können, beispielsweise $SiCl_4$, $TiCl_4$, $Si(OR)_4$ R = Alkyl ; wegen der starken Hydrolysetendenz dieser Substanzen, die aber zur Reaktion in hoch reinem Zustand eingesetzt werden müssen, werden an die Vorrichtungen zur Durchführung dieser Verfahren hohe Anforderungen bezüglich der Dichtigkeit gestellt.

Aus der DD-PS 244 704 ist ein weiteres Verfahren bekannt, nach dem eine gleichmäßige Beschichtung aus zum Beispiel einer Flüssigkeit durch Bestrahlen mit UV-Laser erzeugt werden kann. Bei der Beschichtung handelt es sich um polymerisierende, durchsichtige oder pigmentierte Druckfarben oder Lacke, die einen Fotoinitiator enthalten müssen, der selektiv von dem Laserlicht angeregt wird.

Durchsichtige Beschichtungen dieser Art weisen eine Dicke von 2 bis 150 µm auf, sodaß optische Interferenz-Schichten mit diesem Verfahren nicht erhalten werden können.

Aufgabe der vorliegenden Erfindung ist die Schaffung eines Verfahrens der eingangs genannten Art, mit dem ohne großen Aufwand der in einem Tauchprozeß hergestellte Flüssigfilm einfach und schnell in eine Schicht optischer Qualität umgewandelt werden kann. Unter Schicht optischer Qualität soll eine Schicht von gleichmäßiger Dicke, im gesamten Volumen der Schicht konstanten Brechungsindex und von besonderer Oberflächengüte, sowie geringer Streuung verstanden werden. Mit dem zu schaffenden Verfahren sollen Interferenzschichten hergestellt werden können; deshalb müssen die genannten Forderungen in Schichten einer Dicke im Bereich der Wellenlänge des sichtbaren Lichtes erfüllbar sein. Das zu schaffende Verfahren soll für die verschiedenartigsten Schichten auf unterschiedlichen Substraten anwendbar sein.

Diese Aufgabe wird mit einem Verfahren gelöst, bei dem dem Flüssigfilm durch Einwirkung Strahlung hoher Intensität, geeignet zum sehr schnellen, direkten und im wesentlichen auf die Dicke des Flüssigfilms selbst beschränkten Aufheizen auf hohe Temperatur, die zur Umwandlung des betreffenden Flüssigfilms in die jeweilige Schicht notwendige Energie zugeführt wird.

Das erfindungsgemäße Verfahren verbindet die Vorteile des Tauchbeschichtens - schnelles und einfaches Herstellen von dünnen homogenen Filmen auf großen Substratflächen, wobei ein großer vorrichtungsmäßer Aufwand nicht erforderlich wird - mit den Vorteilen der Laserbehandlung - sehr schnelles, direktes und im wesentlichen auf die Dicke des Flüssigfilms selbst beschränktes Aufheizen auf hohe Temperatur - . Im Gegensatz zu den bekannten Tauchbeschichtungsverfahren mit nachfolgender Schichtausbildung entfällt eine Vortrocknung des Flüssigfilms vor der Umwandlung durch Erhitzen des Substrats samt Beschichtung.

Eine bevorzugte Ausführungsform des erfindungsgemäßen Verfahrens wird so durchgeführt, daß die Umwandlung des Flüssigfilms bereits während des Auftauchens des beschichteten Substrates vorgenommen wird. Diese Ausführungsform ist sowohl zeit- als auch raumsparend. Es fällt kein "Zwischenprodukt" an, da die Umwandlung des Films bereits kurze Zeit nach dem vollständigen Auftauchen abgeschlossen ist. Es wird also fast unmittelbar nach dem Auftauchen das fertige Endprodukt erhalten.

Der Vorteil des erfindungsgemäßen Verfahrens liegt darin, daß im Gegensatz zu den bekannten laserunterstützten CVD-Verfahren nicht das Reaktionsgas oder das zu beschichtende Substrat durch Absorption des Laserstrahls aufgeheizt wird, sondern daß der Flüssigfilm direkt den Laserstrahl absorbiert und dadurch aufgeheizt wird. Das geschieht außerordentlich schnell (msec), so daß der direkt aufgeheizte Dickenbereich des Films und des darunterliegenden Substrats im allgemeinen bei ca. 10 µm liegt.

Die Absorptionskonstante der $CO_2$-Laserstrahlung in z.B. Glas beträgt ca. $3 \times 10^3$ cm. Daraus folgt, daß bei einer Eindringtiefe von 1 µm etwa 26%, bei 5 µm ungefähr 78 %, bei 10 µm etwa 95 % und bei 15 µm ungefähr 99 % der Strahlung absorbiert werden.

Näherungsweise gilt für die Aufheizung T einer bestrahlten Oberfläche in Abhängigkeit von der Bestrahlungsstärke (= Intensität) B in $W/cm^2$ und Einstrahldauer t in sec:

$$T_t = T_o + 7,17 \sqrt{t} \cdot B$$
$$T_o = \text{Ausgangstemperatur} .$$

Die für oxidische Tauchschichten üblichen Ausbildungstemperaturen, z.B. für $TiO_2$ bzw. $SiO_2$, liegen bei ca. $450\degree$ C. Bei einer gegebenen Bestrahlungsstärke von 2000 $W/cm^2$ wird die erforderliche Temperatur in etwa 1/1000 sec erreicht. Im Vergleich dazu liegen die erforderlichen Zeiten beim konventionellen Aufheizen im Bereich von mehreren Minuten.

Die benötigte Energiemenge, die zur Erreichung der für die Schichtausbildung erforderlichen Temperaturen benötigt wird, ist aus diesen Gründen gering. Bei den bisher verwendeten Verfahren zur Ausbildung von Tauchschichten mußten Substrat und Schicht gemeinsam auf die erforderliche Temperatur gebracht werden. Da dies nicht mehr notwendig ist, ergibt sich eine deutliche Energieeinsparung.

Im Gegensatz zum Abscheiden aus der Gasphase wie bei dem CVD-Verfahren oder im Vakuum zeichnet sich das Tauchverfahren dadurch aus, daß in einem einzigen Beschichtungsvorgang sämtliches Material aufgebracht wird. Umso überraschender ist es, daß in der sehr kurzen Zeit, die für die Schichtausbildung zur Verfügung steht, zumindest gleichwertige, in der Mehrzahl der Fälle sogar bessere Schichtenqualitäten, z.B. bezüglich des Brechungsindex, erhalten werden. Beispielsweise haben nach dem erfindungsgemäßen Verfahren hergestellte $TiO_2$-Schichten einen wesentlich höheren Brechungsindex als die bisher bekannten $TiO_2$-Tauchschichten.

Auch die Konstanz des Brechungsindex im gesamten Schichtvolumen und die Schichtdickenkonstanz, die besonders für die Herstellung von Interferenzfiltern von Bedeutung ist, sind hervorragend.

Besonders überraschend war, daß sogar frisch hergestellte Flüssigfilme ohne weitere An- oder Vortrocknung direkt durch Bestrahlung mit einem Laser in die entsprechende optische Schicht umgewandelt werden können, wobei die Qualität der Schichten mindestens genauso gut wie diejenige der nach herkömmlichen Verfahren hergestellten Schichten war.

Mit dem erfindungsgemäßen Verfahren können Schichten auf einer Vielzahl von Substraten aufgebracht werden. Besonders bevorzugt sind Glassubstrate in Platten- oder Röhrenform.

Zur Zuführung der zur Umwandlung notwendigen Energie können handelsübliche Laser mit ausreichender Energie benutzt werden. Aufgrund ihres hohen Wirkungsgrades lassen sich $CO_2$-Laser (Wellenlänge der abgegebenen monochromatischen Strahlung 10,3 µm) besonders vorteilhaft einsetzen. Für Flüssigfilme, die im UV bzw. im Sichtbaren stark absorbieren, können UV-Laser oder Laser, die im Wellenlängenbereich des Sichtbaren arbeiten, allein oder in Kombination benutzt werden.

Als weitere Laser können XeCl-, Kr$^+$-, ArF-, Nd-Glas- oder Rubinlaser verwendet werden.

Die Intensität der kohärenten monochromatischen Strahlung, die zur Umwandlung dem jeweiligen Flüssigfilm zugeführt wird, beträgt 300 bis 5000 Watt/cm$^2$, vorzugsweise 600 bis 1000 Watt/cm$^2$.

Wie bereits angedeutet, kann durch geeignete Wahl der Bestrahlungsstärke ( = Intensität) in Abhängigkeit von der Einstrahldauer die Temperatur, die der bestrahlte Flüssigfilm erreicht, gesteuert und somit die für den jeweiligen Flüssigfilm zur Umwandlung spezifische Ausbildungstemperatur eingestellt werden.

Mit dem erfindungsgemäßen Verfahren läßt sich eine außerordentliche Vielzahl von Metalloxidschichten herstellen. Mit Vorteil kann das erfindungsgemäße Verfahren bei der Herstellung von Schichten aus Oxiden der folgenden Metalle oder deren Gemische verwendet werden:
Mg, La, Ba, Sr, Al, Ga, In, Si, Ge, Sn, Pb, Sb, Be, Te, Zr, Hf, Nb, Ta, Cr, Mo, W, Mn, Fe, Ru, Co, Rh, Ni, Pd, Zn, Cd, Ca und der Seltenen Erden.

Ein weiterer außerordentlicher Vorteil des beanspruchten Verfahrens liegt darin, daß es gelingt, halbleitende Schichtstrukturen zu erzeugen, wie z.B. antimon- bzw. fluordotierte Zinndioxid-Schichten und zinndotierte Indiumoxid-Schichten. Die Erzeugung dieser Schichten oder Schichtstrukturen kann direkt in einer Formiergasatmosphäre oder erst in oxidierender Atmosphäre erfolgen, wobei dann aber der zur Ausbildung der Halbleitereigenschaften notwendige Schritt nachträglich durch einfache Temperung in einer Formiergasatmosphäre durchgeführt werden kann.

Welche Möglichkeit gewählt wird, hängt allein von den hier nicht näher zu erläuternden möglichen verfahrenstechnischen Vorteilen der einen oder anderen Möglichkeit ab.

Auf diese Weise läßt sich eine Vielfalt von weiteren halbleitenden Schichten auf diese einfache Art herstellen. Erwähnt werden sollen: p-$Cu_2O$, n-$TiO_2$, CdO, $Cd_2SnO_4$, $CdSnO_3$, n-$Fe_2O_3$.

Besonders vorteilhaft können mit dem erfindungsgemäßen Verfahren Indiumoxid-, Zinn-Indiumoxid- und mit Cadmium dotierte Zinnoxid- bzw. Indiumoxid-Schichten mit einem UV-Laser ausgebildet werden, wobei bei den cadmiumdotierten Schichten eine reduzierende Behandlung in einer Formiergasatmosphäre abhängig von der Cadmiumkonzentration nicht notwendig zu sein braucht.

Die Erfindung wird nachfolgend beispielhaft an der Herstellung einer $TiO_2$-Schicht erklärt:

Eine alkoholische Lösung von mit Acetylaceton stabilisiertem Tetraethoxytitan (15-30 g $TiO_2$/l) wird in einem klimatisierten Raum auf ein Glassubstrat aufgebracht, indem das Glassubstrat vorsichtig in die Lösung eingetaucht und mit einer Geschwindigkeit von 0,3 bis 0,5 cm/sec wieder herausgezogen wird. Das beschichtete Substrat wird 1 bis 2 min hängen gelassen und anschließend mit einem $CO_2$-Laser beschossen, wobei bei einer Leistungsdichte von 850 Watt/cm$^2$ die Zeit zur Ausbildung der $TiO_2$-Schicht ca. $10^{-2}$ sec dauert. Auf eine so hergestellte $TiO_2$-Schicht kann eine zweite Schicht aus z.B. $SiO_2$ aufgebracht werden. Hierbei wird eine alkoholische Lösung eines definiert anhydrolysierten Kieselsäuremethylesters verwendet. Das mit der $TiO_2$-Schicht versehene Substrat wird in diese Lösung getaucht und wiederum je nach gewünschter Schichtdicke mit einer auf die Schichtdicke abgestimmten Geschwindigkeit herausgezogen, bei Raumtemperatur kurz angetrocknet und ebenfalls mit einem $CO_2$-Laser bestrahlt. Die Ausbildungszeiten und die verwendete Leistungsdichte können wie bei der $TiO_2$-Schicht gewählt werden.

Vorteilhaft kann das Aufbringen der Flüssigfilme auch durch Aufschleudern erfolgen, wobei die Schichten ebenfalls sofort danach mit einem $CO_2$-Laser ausgebildet werden können.

Zur Bestrahlung der Flüssigfilme mit Laserlicht kann so vorgegangen werden, daß das beschichtete Substrat auf einer x-y- "stage" befestigt und mit einer konstanten Geschwindigkeit von im Bereich beispielsweise 16,6 bis 20 cm/sec an einem $CO_2$-laser, der Strahlung mit einer Intensität von 58 Watt/cm$^2$ abgibt, vorbeigeführt wird. Eine so hergestellte $TiO_2$-Schicht besitzt einen Brechwert von $n_d$ = 2,40 und eine entsprechend hergestellte $SiO_2$-Schicht einen Brechwert von $n_d$ = 1,46.

Nach dem beschriebenen Verfahren können definierte Interferenzschichten-Systeme in hoher Qualität hergestellt werden, die den nach den bisher üblichen Verfahren hergestellten zumindest gleichwertig, in vielen Fällen aber deutlich überlegen sind. Besonders bei Mehrschichten-Systemen macht sich der Zeitvorteil gegenüber dem herkömmlichen Tauchverfahren vorteilhaft bemerkbar, da die Trocknung des Flüssigfilms in einem separaten Arbeitsschritt jeweils vor der Umwandlung in die fertige Schicht entfallen kann.

Besonders erwähnt werden soll der wesentlich höhere Brechwert so hergestellter TiO$_2$-Schichten ($n_D$ = 2,40 bis 2,60) im Vergleich zu den bisher beschriebenen TiO$_2$- Tauchschichten ($n_D$ = 2,0 bis 2,3). Nach dem erfindungsgemäßen Verfahren hergestellte SiO$_2$-Schichten weisen ebenfalls einen leicht höheren Brechungsindex auf, der nahe bei dem theoretisch zu erwartenden von Quarz liegt (1,46). Bei den bisher üblichen Tauchbeschichtungsverfahren müssen die Schichten einen definierten und zeitlich aufwendigen Temperprozeß durchlaufen. Ein Vorteil des hier beschriebenen Verfahrens liegt darin, daß das Substrat nur in der obersten Grenzschicht aufgeheizt wird und daher nach der Umwandlung sehr rasch wieder abkühlt und die nächste Schicht durch Eintauchen aufgebracht werden kann, so daß deshalb aufeinanderfolgende Schichten in mehrschichtigen Interferenzsystemenen in kürzeren Zeitabständen hintereinander aufgebracht und die gesamten Systeme bedeutend schneller als bisher möglich hergestellt werden können.

Mit Hilfe zweiachsiger Positioniereinrichtungen mit Schrittmotorsteuerung lassen sich direkt einfache Strukturen erzeugen, da sich in der Regel die mit dem Laser nicht beaufschlagten Stellen sehr leicht durch geeignete Lösungsmittel wieder entfernen lassen. Insbesondere lassen sich auch mit Hilfe geeigneter Masken Mikrostrukturen bis in den μm-Bereich erzeugen.

## Ansprüche

1. Verfahren zur Herstellung von festen optischen Einfach- und Merhfach-Interferenz-Schichten aus Metalloxiden auf einem Substrat, bei dem auf das Substrat pro Schicht durch Ein- und Auftauchen in eine Tauchlösung oder durch Aufschleudern ein Flüssigfilm, der reaktive Verbindungen enthält, aus denen anschließend die Schichten erzeugt werden, aufgebracht und der Flüssigfilm in die Schicht umgewandelt wird, dadurch gekennzeichnet, daß dem Flüssigfilm durch Einwirkung von Strahlung hoher Intensität, geeignet zum sehr schnellen, direkten und im wesentlichen auf die Dicke des Flüssigfilms selbst beschränkten Aufheizen auf hohe Temperatur, die zur Umwandlung des betreffenden Flüssigfilms in die jeweilige Schicht notwendige Energie zugeführt wird.

2. Verfahren nach Anspruch 1, dadurch gekennzeichnet, daß die zur Umwandlung notwendige Energie bereits während des Auftauchens zugeführt wird.

4. Verfahren nach Anspruch 1 oder 2, dadurch gekennzeichnet, daß als Substrat ein Glaskörper verwendet wird.

4. Verfahren nach Anspruch 3, dadurch gekennzeichnet, daß als Glaskörper eine Glasplatte verwendet wird.

5. Verfahren nach Anspruch 3, dadurch gekennzeichnet, daß als Glaskörper ein Glasrohr verwendet wird.

6. Verfahren nach einem der vorhergehenden Ansprüche, dadurch gekennzeichnet, daß die notwendige Energie mit einem Laser zugeführt wird.

7. Verfahren nach Anspruch 6, dadurch gekennzeichnet, daß die notwendige Energie mit einem UV-Laser zugeführt wird.

8. Verfahren nach Anspruch 6, dadurch gekennzeichnet, daß die notwendige Energie mit einem CO$_2$-, XeCl-, Kr$^+$-, ArF-, Nd-Glas- oder Rubinlaser zugeführt wird.

9. Verfahren nach einem der vorhergehenden Ansprüche, dadurch gekennzeichnet, daß die Strahlung mit einer Intensität von 300 bis 5000 Watt/cm$^2$ dem jeweiligen Flüssigfilm zugeführt wird.

10. Verfahren nach Anspruch 9, dadurch gekennzeichnet, daß die Strahlung mit einer Intensität von 600 bis 2000 Watt/cm$^2$ dem jeweiligen Flüssigfilm zugeführt wird.

11. Verfahren nach einem der vorhergehenden Ansprüche, dadurch gekennzeichnet, daß Oxidschichten von Mg, Ca, Ba, Sr, Al, Ga, In, Si, Ge, Sn, Pb, Sb, Be, Te, Zr, Hf, Nb, Ta, Cr, Mo, W, Mn, Fe, Ru, Co, Rh, Ni, Pd, Zn, Cd, La und der Seltenen Erden und deren Gemische hergestellt werden.

12. Verfahren nach Anspruch 11, dadurch gekennzeichnet, daß Tauchlösungen verwendet werden, in denen bereits anhydrolysierte Verbindungen der die betreffenden Oxidschichten bildenden Elemente vorliegen.

13. Verfahren nach einem der vorhergehenden Ansprüche, dadurch gekennzeichnet, daß die Umwandlung unter Erzeugung einer halbleitenden Schicht in einer Formiergasatmosphäre durchgeführt wird.

14. Verfahren nach einem der vorhergehenden Ansprüche, dadurch gekennzeichnet, daß dotierte halbleitende Oxidschichten hergestellt werden.

15. Verfahren nach einem der vorhergehenden Ansprüche, dadurch gekennzeichnet, daß lediglich bestimmte Bereiche des Flüssigfilms mit der Strahlung beaufschlagt werden und anschließend der nicht bestrahlte Bereich des Flüssigfilms mit einem geeigneten Lösungsmittel wieder entfernt wird.

16. Verfahren nach Anspruch 15, dadurch gekennzeichnet, daß durch das Bestrahlen lediglich bestimmter Bereiche und anschließendes Wiederentfernen der nicht bestrahlten Bereiche des Flüssigfilms Mikrostrukturen bis in den μm-Bereich erzeugt werden.

17. Verfahren nach Anspruch 15 oder 16, dadurch gekennzeichnet, daß die Bestrahlung lediglich bestimmter Bereiche durch Vorschalten einer geeigneten Maske, die Strahlung lediglich in den bestimmten Bereichen durchtreten läßt, bewerkstelligt wird.